# EUROPEAN PATENT SPECIFICATION

(11) **EP 2 109 903 B1**
(45) Date of publication and mention of the grant of the patent: **15.04.2015**
(21) Application number: 06845997.3
(22) Date of filing: 21.12.2006
(51) Int. Cl.: H01M 8/24

(54) **FUEL CELL STACK HAVING AN INTEGRATED END PLATE ASSEMBLY**
BRENNSTOFFZELLENSTAPEL MIT EINER INTEGRIERTEN ENDPLATTENBAUGRUPPE
EMPILAGE DE PILES À COMBUSTIBLE AYANT UN ENSEMBLE DE PLAQUE D'EXTRÉMITÉ INTÉGRÉ

(43) Date of publication of application: 21.10.2009
(73) Proprietor: United Technologies Corporation, Hartford, CT 06101 (US)
(72) Inventor: LAKE, Jeffrey, A., Vernon, CT 06066 (US); BACH, Leonard, A., West Hartford, CT 06107 (US); INIGO, Pedro, Hartford, CT 06114 (US); REGE, Evan, C., Portland, OR 97205 (US); VARGAS, Chris, Hamden, CT 06517 (US); VICTOR, Stephen, P., Guilford, CT 06437 (US)
(74) Representative: Klunker, Hans-Friedrich
(86) International application number: PCT/US2006/049001
(87) International publication number: WO 2008/088308

(56) References cited:
- JP-A- 61 116 770
- JP-A- 2002 343 410
- US-A- 4 615 107
- US-A- 4 997 728
- US-A- 5 009 968
- US-B2- 6 764 786

## Description

### Technical Field

The present disclosure relates to fuel cells that are suited for usage in transportation vehicles, portable power plants, or as stationary power plants, and the disclosure especially relates to a fuel cell stack having an integrated end plate assembly that has a low thermal capacity through use of a combination of a current collector, a light pressure plate and a rigid backbone overlying the pressure plate.

### Background Art

Fuel cells are well-known and are commonly used to produce electrical energy from reducing and oxidizing reactant fluids to power electrical apparatus, such as apparatus on-board space vehicles, transportation vehicles, or as on-site generators for buildings. A plurality of planar fuel cells are typically arranged into a cell stack surrounded by an electrically insulating frame structure that defines manifolds for directing flow of reducing, oxidant, coolant and product fluids as part of a fuel cell power plant. Each individual fuel cell generally includes an anode electrode and a cathode electrode separated by an electrolyte. A fuel cell may also include a water transport plate, or a separator plate, as is well known.

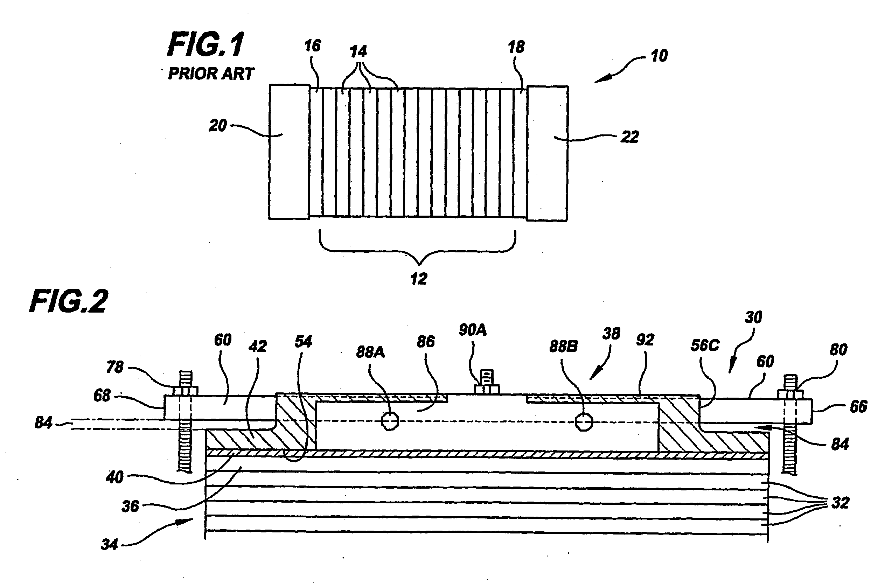

The fuel cell stack produces electricity from reducing fluid and process oxidant streams. As shown in the simplified schematic drawing of a prior art fuel cell stack in FIG. 1, the prior art fuel cell stack 10 includes a reaction portion 12 formed from a plurality of fuel cells 14 stacked adjacent each other that produce electricity in a well-known manner. The plurality of fuel cells 14 includes a first end cell 16 and opposed second end cell 18 at opposed ends of the reaction portion 12 of the fuel cell stack 10. First and second pressure plates 20, 22 overlie the end cells 16, 18 and the pressure plates 20, 22 are secured to each other typically by a plurality of tie rods (not shown) to apply a compressive load to the stack to seal a plurality of compression seals within the stack 10. Most known pressure plates 20, 22 are made of large, conductive metal materials.

During operation of such fuel cell stacks 10, creation of heat by the stack 10, and flow of compressed fluids through the stack 10 results in expansion and contraction of dimensions of the stack 10 within operating dynamic limits of the fuel cell stack 10. Therefore, to permit expansion of the stack 10 within such limits, known fuel cell stacks 10 utilize a load follow-up system. A common load follow-up system includes one or more belleville washers (not shown) secured to each tie rod of the stack 10, between a tie rod securing nut (not shown) and the pressure plates 20, 22. Such a load follow-up system provides for limited expansion within the operating dynamic limits of the stack 10 while applying a constant minimum load to the stack 10. Traditionally, to achieve an effective load follow-up system, known fuel cell stacks 10 have utilized large, heavy, metallic pressure plates 20, 22 as part of the load follow-up system.

JP 61116770 A discloses a fuel cell stack including belleville washers for adjusting the compression degree of the cell stack. The end plates of the stack have fastening pieces projecting beyond the exterior perimeter of the cell stack. Tie-rods are slidably mounted within the fastening pieces by using a combination of belleville washers and nuts.

Such known fuel cell stacks 10 have given rise to many problems related to a high thermal capacity of the large pressure plates 20, 22. For example, during a "bootstrap" start up from subfreezing conditions, preferably no auxiliary heated fluids are applied to the fuel cell stack 10, while a reducing fluid, such as hydrogen, and an oxidant, such as oxygen or air, are supplied to the fuel cells 14. In a fuel cell 14 utilizing a proton exchange membrane ("PEM") as the electrolyte, the hydrogen electrochemically reacts at a catalyst surface of an anode electrode to produce hydrogen ions and electrons. The electrons are conducted to an external load circuit and then returned to the cathode electrode, while the hydrogen ions transfer through the electrolyte to the cathode electrode, where they react with the oxidant and electrons to produce water and release thermal energy. Electricity produced by the fuel cells 14 flows into and/or through the conductive pressure plates 20, 22.

During such a "bootstrap" start up, the fuel cells 14 that are in a central region of the stack 10 quickly rise in temperature compared to the end cells 16, 18 that are adjacent opposed ends of the stack 10. The end cells 16, 18 heat up more slowly because heat generated by the end cells 16, 18 is rapidly conducted into the large, conductive metallic pressure plates 20, 22. If a temperature of the end cells 16, 18 is not quickly raised to greater than 0 degrees Celsius ("°C"), water in water transport plates within the stack 10 will remain frozen thereby preventing removal of product water, which results in the end cells 16, 18 being flooded with fuel cell product water. The flooding of the end cells 16, 18 retards reactant fluids from reaching catalysts of the end cells 16, 18 and may result in a negative voltage in the end cells 16, 18. The negative voltage in the end cells 16, 18 may result in hydrogen gas evolution at cathode electrodes and/or corrosion of carbon support layers of electrodes of the cells 16, 18. Such occurrences would degrade the performance and long-term stability of the fuel cell stack 10.

Many efforts have been undertaken to resolve such problems. For example, U.S. Patent No. 6,764,786 that issued on July 20, 2004, to Morrow et al. discloses a pressure plate that is made of an electrically non-conductive, non-metallic, fiber reinforced composite material, so that the pressure plate is light, compact and has a low thermal capacity. Similarly U.S. Patent No. 6,824,901 that issued on November 30, 2004, to Reiser et al. discloses a fuel cell stack having thermal insulting spacers between pressure plates and end cells. Both of these Patents are owned by the assignee of all rights in the present disclosure. While known fuel cell stacks have limited such problems related to the high thermal capacity of large, metallic pressure plates, such fuel cell stacks still present substantial challenges for efficient operation, especially for PEM electrolyte based fuel cells within fuel cell stacks that undergo frequent start-stop cycles in varying ambient conditions, such as in powering transportation vehicles.

US 5009968 A discloses a fuel cell stack assembly comprising the fuel cell stack, pressure plates at the upper and lower ends of the fuel cell stack, and a thermal insulation between the fuel cell stack and each pressure plate. The assembly is tied together by tie-rods which are connected to a leaf spring, thus continually applying a compressive load. An element situated between pressure plate and leaf spring has a shape tapering downwardly toward the pressure plate and provides an area for deflection of the leaf spring.

US 4615107 A discloses a method for assembling a fuel cell stack using a temporary supporting structure. The fuel cell stack has, at both ends, end plates with even surfaces. The stack is tied-up and compressed by crossed tie bars overlying the end plates and connected by means of tie-rods.

Accordingly, there is a need for a fuel cell stack having end cells wherein temperatures of the end cells can be raised to greater than 0°C as quickly as possible during start up from subfreezing conditions, and that can also provide an efficient load follow-up system.

### Summary

Subject-matter of the invention is a fuel cell stack as claimed in claim 1, and a method of dynamically recuring fuel cells within a fuel cell stack as claimed in claim 6. Embodiments of the invention are claimed in the dependent claims.

The disclosure is a fuel cell stack for producing electricity from reducing fluid and process oxidant reactant streams. The stack includes a plurality of fuel cells stacked adjacent each other to form a reaction portion of the fuel cell stack. An end cell is secured at an outer end of the reaction portion of the fuel cell stack. The stack also includes an integrated end plate assembly secured' adjacent the end cell. The assembly includes a current collector secured adjacent and in electrical communication with the end cell, and a pressure plate secured adjacent the current collector and overlying the end cell. The pressure plate is made of an electrically non-conductive, non-metallic composite material. The pressure plate defines a backbone-support plane that extends a distance from a center of the pressure plate to between about thirty percent and about eighty percent of a distance between the center of the pressure plate and an exterior perimeter of the pressure plate. (For purposes herein, the word "about" is to mean plus or minus twenty percent.) The pressure plate also defines a deflection plane extending between the backbone-support plane and the exterior perimeter of the pressure plate. The deflection plane is also defined between the backbone-support plane and a contact surface of the pressure plate adjacent the current collector.

The integrated end plate assembly also includes a backbone having a plurality of tie-rod ends defining throughbores configured to receive and secure tie rods adjacent a perimeter of the fuel cell stack. The backbone includes at least one beam that extends between the tie-rod ends. The backbone is secured adjacent the backbone-support plane of the pressure plate, and the beam contacts and extends along the backbone-support plane so that the pressure plate is secured between the backbone and the current collector. The tie-rod ends of the backbone overlie the deflection plane of the pressure plate to thereby define a gap between the tie-rod ends and the deflection plane. The backbone has adequate flexibility to permit expansion of the fuel cell stack within operating dynamic limits of the stack and the backbone also has adequate flexural strength to prohibit expansion of the fuel cell stack beyond the operating dynamic limits of the stack. The deflection plane is defined within the pressure plate an adequate distance from the backbone-support plane to permit flexure of the backbone within the gap defined between the tie rod ends of the backbone and the deflection plane.

By integrating the backbone with the multi-plane pressure plate, the present fuel cell stack achieves an efficient follow-up load system without the heavy, high thermal mass of known fuel cell stacks. Through deflection of the tie rod ends of the backbone within the gap adjacent the deflection plane of the pressure plate, the backbone acts as a cantilevered beam to extend between opposed perimeters of the pressure plate to both redistribute a clamping load from the tie rod ends through the center of the pressure plate, and to also provide sufficient deflection to provide a load follow-up system for the cell stack.

Upon assembly of the fuel cell stack, as the tie rod nuts tighten the tie rods to apply a compressive load to the stack, the tie rod ends bend or deflect into the gap, but do not contact the deflection plane of the pressure plate. During operation of the fuel cell stack the tie rod ends will deflect slightly at different operating temperatures and conditions of the stack to permit expansion of the stack within the operating dynamic limits of the stack. The backbone is configured with adequate flexural strength to prohibit expansion of the stack beyond those limits. Deflection of the backbone will also gradually decrease over time because fuel cell components become slightly thinner due to compressive creep. This follow-up load system provided by the cantilever beam-like deflection of the backbone results in significantly less change in an overall load of the fuel cell stack for a specific change in stack thickness compared to changes in a load of a fuel cell stack having known large metal pressure plates for a similar change in stack thickness. In a preferred embodiment, the backbone is made of stainless steel.

Accordingly, it is a general purpose of the present disclosure to provide a fuel cell stack having an integrated end plate assembly that overcomes deficiencies of the prior art.

It is a more specific purpose to provide a fuel cell stack having a low thermal mass integrated end plate assembly that distributes a clamping load from a perimeter of the fuel cell stack through a center of the stack, and that provides an efficient follow-up load system to afford limited expansion of the stack.

These and other purposes and advantages of the present a fuel cell stack having an integrated end plate assembly will become more readily apparent when the following description is read in conjunction with the accompanying drawings.

### Brief Description of Drawings

Figure 1 is a simplified schematic representation of a prior art fuel cell stack.
Figure 2 is a sectional, schematic side view of a fuel cell stack having an integrated end plate assembly constructed in accordance with the present disclosure.
Figure 3 is a top plan view of the Figure 2 fuel cell stack showing a backbone secured within a pressure plate.
Figure 4 is a top plan view of the backbone of Figure 3.
Figure 5 is a top plan view of the pressure plate of Figure 3 showing a backbone-support plane and a deflection plane defined within the plate.

### Description of the Preferred Embodiments

Referring to the drawings in detail, a sectional view of a fuel cell stack having an integrated end plate assembly is shown in FIG. 2, and is generally designated by the reference numeral 30. The fuel cell stack 30 includes a plurality of fuel cells 32 stacked adjacent each other to form a reaction portion 34 of the fuel cell stack 30 for producing electricity from reducing fluid and process oxidant reactant streams. An end cell 36 is secured at an outer end of the reaction portion 34 of the fuel cell stack 30. The fuel cell stack 30 also includes an integrated end plate assembly 38 secured adjacent the end cell 36.

The integrated end plate assembly 38 includes an electrically conductive current collector 40 secured adjacent to and in electrical communication with the end cell 36 to direct flow of the electrical current from the fuel cells 32, 36 out of the stack 30. A pressure plate 42 is secured adjacent the current collector 40 at a surface of the current collector 40 opposed to the surface of the current collector 40 contacting the end cell 36. The pressure plate may also overlie the end cell 36. The pressure plate 42 has adequate stiffness to apply an even compressive load to the fuel cells 32, 36 of the stack 30, and may be made of an electrically non-conductive, non-metallic composite material.

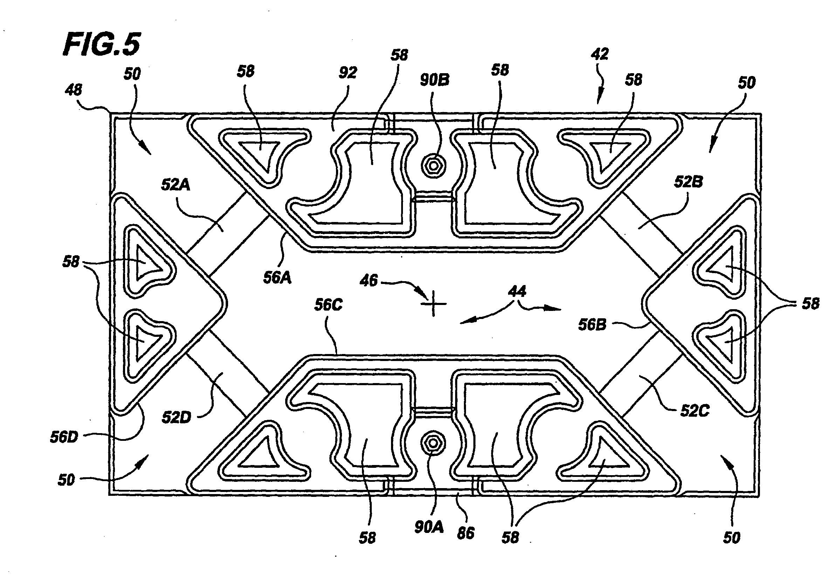

The pressure plate 42 defines a backbone-support plane 44 shown in FIG. 5. The backbone-support plane 44 extends a distance from a center 46 of the pressure plate 42 to between about thirty percent and about eighty percent, or preferably between about fifty percent and about sixty percent of a distance between the center 46 of the pressure plate 42 and an exterior perimeter 48 of the pressure plate 42. An optimal distance of the extension of the backbone-support plane 44 is about fifty-five percent. This distance is established to minimize undesirable distortion of the pressure plate 42 while optimizing deflection of a backbone 60 supported adjacent the backbone-support plane 44, as described in more detail below. The pressure plate 42 also defines a deflection plane 50 extending between the backbone-support plane 44 and the exterior perimeter 48 of the pressure plate 42. A plurality of ramps 52A, 52B, 52C, 52D, or edges may also be defined within the pressure plate 42 between the backbone-support plane 44 and the deflection plane 50. As shown in FIG. 5, the deflection plane 50 may be defined at a plurality of locations at the exterior perimeter 48 of the pressure plate 42, such as at the four corners of the rectangular-shaped pressure plate 42 shown in FIG. 5. The deflection plane 50 is also defined between the backbone-support plane 44 and a contact surface 54 of the pressure plate 42 that is adjacent to the current collector 40. By use of the phrases "backbone-support plane 44" and "deflection plane 50" it is meant that the two components are on differing planes, and hence are not co-planar. However, the phrases do not mean that that the "backbone-support plane 44" or "deflection plane 50" are necessarily planar throughout their respective surface areas, or are necessarily in a plane parallel to each other or to any other component of the fuel cell stack 30. In a preferred embodiment, the backbone-support plane 44 and deflection plane 50 may be planar throughout their surface areas, and may also be in parallel planes, but that is not a requirement of the disclosure. The pressure plate 42 may also define a plurality of walls 56A, 56B, 56C, 56D, adjacent to the backbone-support plane 44 and/or the deflection plane 50 and arising in a direction away from the current collector 40. The pressure plate 42 may also define a plurality of cut-outs 58 to minimize material requirements in fabrication of the plate 42.

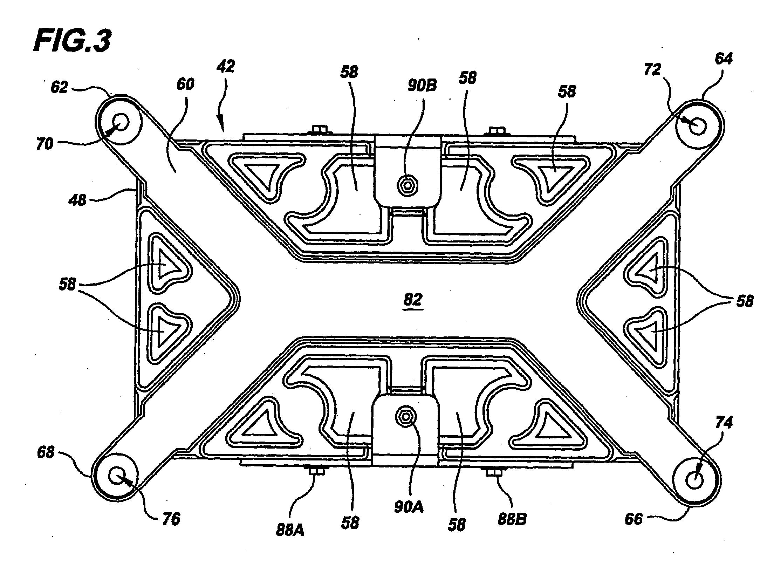

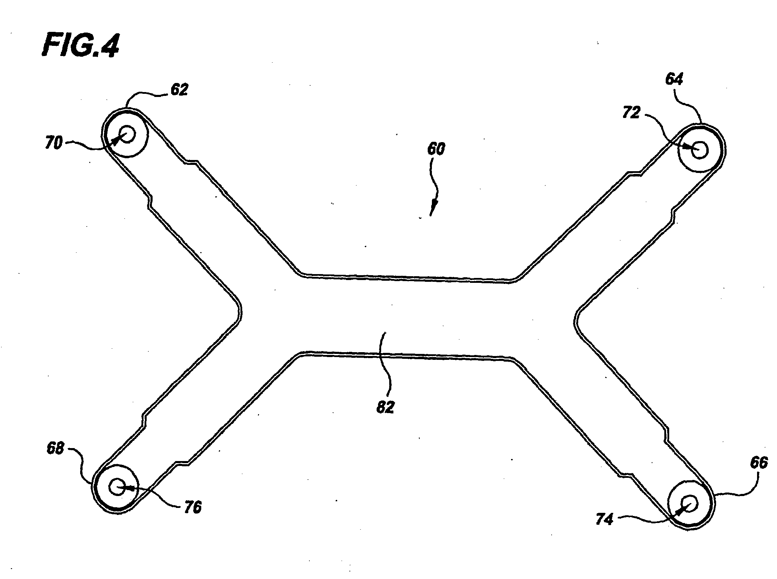

The integrated plate assembly 38 also includes the backbone 60 as shown in FIGS. 2, 3, and 4. The backbone 60 includes a plurality of tie-rod ends 62, 64, 66, 68, and each tie-rod end 62 defines a throughbore 70, 72, 74, 76 configured to receive and secure tie-rods 78, 80 adjacent the perimeter of a cell stack 30, as shown in FIGS. 2 and 3. While FIG. 2 shows only one end of the fuel cell stack 30, it is to be understood that the present disclosure may include identical or similar structures described herein at an opposed end (not shown) of the fuel cell stack 30. The backbone 60 also includes at least one beam 82 extending between the tie-rod ends 62, 64, 66, 68. As best shown in FIGS. 2 and 3, the backbone 60 is secured adjacent the backbone-support plane 44 of the pressure plate 42, and the beam 82 is configured to contact and extend along the backbone-support plane 44 to secure the pressure plate 42 between the backbone 60 and the current collector 40. In a preferred embodiment, the beam 82 passes over the center 46 of the pressure plate 42 to facilitate distribution of the tie rod 78, 80 clamping forces throughout the pressure plate 42.

The tie-rod ends 62, 64, 66, 68, of the backbone 60 are configured to overlie the deflection plane 50 of the pressure plate 42, thereby defining a gap 84 between the tie-rod ends and deflection plane 50, as shown in FIG. 2. The backbone 60 is configured to have adequate flexibility to permit expansion of the fuel cell stack within operating dynamic limits of the stack 30 and the backbone 60 has adequate flexural strength to prohibit the fuel cell stack 30 from expanding beyond the operating dynamic limits of the stack 30. The deflection plane 50 is defined within the pressure plate 42 an adequate distance from the backbone-support plane 44 to permit the described deflection of the backbone 60 within the gap 84.

The fuel cell stack 30 may also include a current collector lead 86 that is secured by fasteners 88A, 88B to the pressure plate 42 and that is secured in electrical communication with the current collector 40 to direct electrical current from the collector 40 to current terminals 90A, 90B that may be secured at an outer surface 92 of the pressure plate 42. As best seen in FIGS. 3 and 5 the walls 56A, 56B, 56C, 56D, that are defined within the pressure plate 42 and adjacent the backbone-support plane 44 and/or the deflection plane 50 are also configured to be adjacent the backbone 60 on the backbone-support plane 44. The walls 56A, 56B, 56C, 56D thereby prohibit lateral motion of the backbone 60 in any direction about parallel to a plane defined by the contact surface 54 of the pressure plate 42.

By integrating the backbone 60 with the pressure plate 42 that has both the backbone-support plane 44 and the deflection plane 50, the fuel cell stack 30 performs as an efficient follow-up load system, without a heavy, high thermal mass pressure plate 20, 22 of a prior art fuel cell stack 10. The backbone 60 may be made of any material that is sufficiently strong to achieve the described functions. A preferred material for the backbone 60 is stainless steel, and a preferred stainless steel is 316L stainless steel. A preferred current collector 40 is constructed of gold plated tin, or gold plated 316L stainless steel. By decreasing an overall mass of the backbone 60 through high-strength materials, the detrimental loss of heat described above by fuel cells 32 adjacent the end cell 36 can be eliminated or minimized, while also providing the described follow-up load system. In a preferred embodiment, a maximum planar cross-sectional area of the backbone 60 in a plane parallel to the contact surface 54 of the pressure plate 42 is no greater than about fifty percent of a planar cross sectional area of the pressure plate 42 in a plane parallel to the contact surface 54 of the pressure plate 42.

In use of the fuel cell stack 30 having the integrated end plate assembly 38, as the tie rods 78, 80 are tightened upon the backbone 60 tie rod ends 62, 64, 66, 68, the tie rods 78, 80 apply a compressive load to the stack 30. The tie rod ends 62, 64, 66, 68 bend or deflect into the gap 84, but do not contact the deflection plane 50 of the pressure plate 42. During operation of the fuel cell stack 30 the tie rod ends 62, 64, 66, 68 will deflect slightly at different operating temperatures and conditions of the stack 30 to permit expansion of the stack 30 within the operating dynamic limits of the stack 30. Deflection of the backbone 60 will also gradually decrease over time because fuel cell stack 30 components become slightly thinner due to compressive creep. The follow-up load system provided by the cantilever beam-like deflection of the backbone 60 within the gap 84 results in significantly less change in an overall load of the fuel cell stack 30 for a specific change in stack 30 thickness compared to changes in a load of a prior art fuel cell stack 10 having known large metal pressure plates 20, 22 for a similar change in thickness of the prior art stack 10.

The present disclosure also includes a method of dynamically securing fuel cells 32, 36 within a fuel cell stack 30, including the steps of defining a backbone-support plane 44 within a pressure plate 42 so that the backbone-bone support plane 44 extends a distance from a center 46 of the pressure plate 42 that is between about thirty percent and about eighty percent of a distance between the center of the plate 42 and an exterior perimeter 48 of the plate 42; defining a deflection plane 50 within the pressure plate 42 extending between the backbone-support plane 44 and the exterior perimeter 48 of the pressure plate and between the backbone-support plane 44 and the contact surface 54 of the pressure plate 42; securing the pressure plate 42 adjacent a current collector 40; securing the current collector 40 adjacent the end cell 36 of the stack 30; securing the backbone 60 within the backbone-support plane 44 so that tie rod ends 62, 64, 66, 68 of the backbone 60 extend over the deflection plane 50 defined within the pressure plate 42, the backbone (60) configured to have adequate flexibility to permit expansion of the fuel cell stack (30) within operating dynamic limits of the stack (30) and having predetermined flexural strength to prohibit expansion of the stack (30) beyond the operating dynamic limits of the stack (30); and, deflecting the tie rod ends 62, 64, 66, 68 within the gap 84 defined between the tie rod ends 62, 64, 66, 68 and the deflection plane 50 by tightening tie rods 78, 80 within the tie rod ends .62, 64, 66, 68 of the backbone 60. By tightening the tie rods 78, 80 to deflect the tie rod ends 62, 64, 66, 68 into the gap 84, the method of dynamically securing the fuel cells 32, 36 within the fuel cell stack 30 provides for both redistribution of the compressive load of the tie rods 78, 80 adjacent the exterior perimeter 48 through the pressure plate 42 to the center 46 of the plate 42, and also provides the described follow-up load system.

While the present disclosure has been disclosed with respect to the described and illustrated fuel cell stack 30 having an integrated end plate assembly 38, it is to be understood the disclosure is not to be limited to those alternatives and described embodiments. For example, the disclosure may be utilized with any fuel cells including phosphoric acid fuel cells, proton exchange membrane fuel cells, etc. Accordingly, reference should be made primarily to the following claims rather than the forgoing description to determine the scope of the disclosure.

## Claims

1. A fuel cell stack (30) for producing electricity from reducing fluid and process oxidant reactant streams, the fuel cell stack (30) comprising:
a plurality of fuel cells (32) stacked adjacent each other to form a reaction portion (34) of the fuel cell stack (30), the plurality of fuel cells (32) including an end cell (36) at an outer end of the reaction portion (34) of the fuel cell stack (30);
the fuel cell stack (30) **characterized by** an integrated end plate assembly (38) secured adjacent the end cell (36), the assembly including;
i. a current collector (40) secured adjacent and in electrical communication with the end cell (36);
ii. a pressure plate (42) secured adjacent the current collector and overlying the end cell (36), the pressure plate (42) defining a backbone-support plane (44) extending a distance from a center (46) of the pressure plate to between about thirty percent and about eighty percent of a distance between the center (46) of the pressure plate (42) and an exterior perimeter (48) of the pressure plate (42), and the pressure plate (42) defining a deflection plane (50) extending between the backbone-support plane (44) and the exterior perimeter (48) of the pressure plate (42), the deflection plane (50) also being between the backbone-support plane (44) and a contact surface (54) of the pressure plate (42) adjacent the current collector (40), wherein "about" is to mean plus or minus twenty percent;
iii. a backbone (60) including a plurality of tie-rod ends (62, 64, 66, 68) defining throughbores (70, 72, 74, 76) configured to receive and secure tie rods (78, 80) adjacent a perimeter (48) of the pressure plate (42), the backbone (60) including at least one beam (82) extending between the tie-rod ends (62, 64, 66, 68), the backbone (60) being secured adjacent the backbone-support plane (44) and configured to contact and extend along the backbone-support plane (44), and the tie-rod ends (62, 64, 66, 68) of the backbone (60) configured to overlie the deflection plane (50) and define a gap (84) between the tie-rod ends (62, 64, 66, 68) and the deflection plane (50), the backbone (60) configured to have adequate flexibility to permit expansion of the fuel cell stack (30) within operating dynamic limits of the stack (30) and having predetermined flexural strength to prohibit expansion of the stack (30) beyond the operating dynamic limits of the stack (30); and,
iv. the deflection plane (50) being defined within the pressure plate (42) a predetermined distance from the backbone- support plane (44) to permit flexure of the backbone (60) within the gap (84).

2. The fuel cell stack (30) of claim 1, wherein the backbone-support plane extends a distance from the center (46) of the pressure plate to between about fifty percent and about sixty percent of a distance between the center (46) of the pressure plate (42) and an exterior perimeter (48) of the pressure plate (42).

3. The fuel cell stack (30) of claim 1, wherein the beam (82) of the backbone (60) extends across the center (46) of the pressure plate (42).

4. The fuel cell stack (30) of claim 1, wherein a maximum planar cross sectional area of the backbone (60) in a plane parallel to the contact surface (54) of the pressure plate (42) is no greater than about fifty-percent of a planar cross sectional area of the pressure plate (42) in a plane parallel to the contact surface (54) of the pressure plate (42).

5. The fuel cell stack (30) of claim 1, wherein the pressure plate (42) defines a plurality of walls (56A, 56B, 56C, 56D) adjacent the backbone (60) and arising in a direction away from the current collector (40), the plurality of walls (56A, 56B, 56C, 56D) configured to prohibit lateral motion of the backbone (60) in any direction about parallel to a plane defined by the contact surface (54) of the pressure plate (42).

6. A method of dynamically securing fuel cells (32, 36) within a fuel cell stack (30), comprising the steps of:
a. defining a backbone-support plane (44) within a pressure plate (42), the backbone-support plane (44) configured to extend a distance from a center (46) of the pressure plate (42) to between about thirty percent and about eighty percent of a distance between the center (46) of the plate (42) and an exterior perimeter (48) of the plate (42), and defining a deflection plane (50) within the pressure plate (42) extending between the backbone-support plane (44) and the exterior perimeter (48) of the pressure plate (42) and between the backbone-support plane (44) and a contact .surface (54) of the pressure plate (42), wherein the term "about" is to mean plus or minus twenty percent;
b. securing the contact surface (54) of the pressure plate (42) adjacent a current collector (40);
c. securing the current collector (40) adjacent an end cell (36) of the stack (30);
d. securing a backbone (60) within the backbone-support plane (44) so that tie rod ends (62, 64, 66, 68) of the backbone (60) extend over the deflection plane (50) defined within the pressure plate (42), the backbone (60) configured to have adequate flexibility to permit expansion of the fuel cell stack (30) within operating dynamic limits of the stack (30) and having predetermined flexural strength to prohibit expansion of the stack (30) beyond the operating dynamic limits of the stack (30); and,
e. deflecting the tie rod ends (62, 64, 66, 68) within a gap (84) defined between the tie rod ends (62, 64, 66, 68) and the deflection plane (50) by tightening tie rods (78, 80) within the tie rod ends (62, 64, 66, 68) of the backbone (60).

## Patentansprüche

1. Brennstoffzellenstapel (30) zum Erzeugen von elektrischem Strom aus Reduktionsfluid- und Prozess-Oxidationsmittel-Reaktionsmittelströmen, wobei der Brennstoffzellenstapel (30) Folgendes aufweist:
eine Mehrzahl von Brennstoffzellen (32), die einander benachbart gestapelt sind, um einen Reaktionsbereich (34) des Brennstoffzellenstapells (30) zu bilden, wobei die Mehrzahl von Brennstoffzellen (32) eine Endzelle (36) an einem äußeren Ende des Reaktionsbereichs (34) des Brennstoffzellenstapels (30) aufweist;
wobei der Brennstoffzellenstapel (30) **gekennzeichnet ist durch** eine integrierte Endplattenanordnung (38), die benachbart der Endzelle (36) befestigt ist, wobei die Anordnung Folgendes aufweist:
i. einen Stromkollektor (40), der benachbart der sowie in elektrischer Verbindung mit der Endzelle (36) befestigt ist;
ii. eine Druckplatte (42), die benachbart dem Stromkollektor befestigt ist und der Endzelle (36) überlagert ist, wobei die Druckplatte (42) eine Rückgratelement-Trägerebene (44) definiert, die sich von einem Zentrum (46) der Druckplatte über eine Distanz von zwischen etwa 30 Prozent und etwa 80 Prozent einer Distanz zwischen dem Zentrum (46) der Druckplatte (42) und einer äußeren Begrenzung (48) der Druckplatte (42) erstreckt, und wobei die Druckplatte (42) eine Biegeebene (50) definiert, die sich zwischen der Rückgratelement-Trägerebene (44) und der äußeren Begrenzung (48) der Druckplatte (42) erstreckt, wobei sich die Biegeebene (50) auch zwischen der Rückgratelement-Trägerebene (44) und einer Kontaktfläche (54) der Druckplatte (42) benachbart dem Stromkollektor (40) befindet, wobei unter dem Begriff "etwa" plus oder minus 20 Prozent zu verstehen ist;
iii. ein Rückgratelement (60), das eine Mehrzahl von Zugstangenenden (62, 64, 66, 68) aufweist, die Durchgangsbohrungen (70, 72, 74, 76) definieren, die zum Aufnehmen und Befestigen von Zugstangen (78, 80) benachbart einer Begrenzung (48) der Druckplatte (42) ausgebildet sind, wobei das Rückgratelement (60) mindestens einen Träger (82) aufweist, der sich zwischen den Zugstangenenden (62, 64, 66, 68) erstreckt, wobei das Rückgratelement (60) benachbart der Rückgratelement-Trägerebene (44) befestigt ist und dazu ausgebildet ist, mit der Rückgratelement-Trägerebene (44) in Kontakt zu treten und sich diese entlang zu erstrecken, und wobei die Zugstangenenden (62, 64, 66, 68) des Rückgratelements (60) dazu ausgebildet sind, der Biegeebene (50) überlagert zu werden und einen Spalt (84) zwischen den Zugstangenenden (62, 64, 66, 68) und der Biegeebene (50) zu bilden, wobei das Rückgratelement (60) mit ausreichender Flexibilität ausgebildet ist, um eine Expansion des Brennstoffzellenstapels (30) innerhalb dynamischer Betriebsgrenzen des Stapels (30) zuzulassen, und eine vorbestimmte Biegefestigkeit aufweist, um eine Expansion des Stapels (30) über die dynamischen Betriebsgrenzen des Stapels (30) hinaus zu unterbinden; und
iv. wobei die Biegeebene (50) innerhalb der Druckplatte (42) in einer vorbestimmten Distanz von der Rückgratelement-Trägerebene (44) definiert ist, um ein Biegen des Rückgratelements (60) innerhalb des Spalts (84) zu ermöglichen.

2. Brennstoffzellenstapel (30) nach Anspruch 1,
wobei sich die Rückgratelement-Trägerebene von dem Zentrum (46) der Druckplatte über eine Distanz von zwischen etwa 50 Prozent und etwa 60 Prozent einer Distanz zwischen dem Zentrum (46) der Druckplatte (42) und einer äußeren Begrenzung (48) der Druckplatte (42) erstreckt.

3. Brennstoffzellenstapel (30) nach Anspruch 1,
wobei sich der Träger (82) des Rückgratelements (60) durch das Zentrum (46) der Druckplatte (42) erstreckt.

4. Brennstoffstellenstapel (30) nach Anspruch 1,
wobei eine maximale planare Querschnittsfläche des Rückgratelements (60) in einer Ebene parallel zu der Kontaktfläche (54) der Druckplatte (42) nicht größer ist als etwa 50 Prozent einer planaren Querschnittsfläche der Druckplatte (42) in einer Ebene parallel zu der Kontaktfläche (54) der Druckplatte (42).

5. Brennstoffzellenstapel (30) nach Anspruch 1,
wobei die Druckplatte (42) eine Mehrzahl von Wänden (56A, 56B, 56C, 56D) benachbart dem Rückgratelement (60) sowie ausgehend in einer Richtung von dem Stromkollektor (40) weg definiert, wobei die mehreren Wände (56A, 56B, 56C, 56D) dazu ausgebildet sind, eine seitliche Bewegung des Rückgratelements (60) in einer beliebigen Richtung in etwa parallel zu einer durch die Kontaktfläche (54) der Druckplatte (42) definierten Ebene zu unterbinden.

6. Verfahren zum dynamischen Befestigen von Brennstoffzellen (32, 36) innerhalb eines Brennstoffzellenstapels (30), das folgende Schritte aufweist:
a. Definieren einer Rückgratelement-Trägerebene (44) innerhalb einer Druckplatte (42), wobei die Rückgratelement-Trägerebene (44) derart ausgebildet ist, dass sie sich von einem Zentrum (46) der Druckplatte (42) über eine Distanz von zwischen etwa 30 Prozent und etwa 80 Prozent einer Distanz zwischen dem Zentrum (46) der Platte (42) und einer äußeren Begrenzung der Platte (42) erstreckt, und die innerhalb der Druckplatte (42) eine Biegeebene (50) bildet, die sich zwischen der Rückgratelement-Trägerebene (44) und der äußeren Begrenzung (48) der Druckplatte (42) sowie zwischen der Rückgratelement-Trägerebene (44) und einer Kontaktfläche (54) der Druckplatte (42) erstreckt, wobei unter dem Begriff "etwa" plus oder minus 20 Prozent zu verstehen ist;
b. Befestigen der Kontaktfläche (54) der Druckplatte (42) benachbart einem Stromkollektor (40);
c. Befestigen des Stromkollektors (40) benachbart einer Endzelle (36) des Stapels (30);
d. Befestigen eines Rückgratelements (60) innerhalb der Rückgratelement-Trägerebene (44), so dass sich Zugstangenenden (62, 64, 66, 68) des Rückgratelements (60) über die innerhalb der Druckplatte (42) definierte Biegeebene (50) erstrecken, wobei das Rückgratelement (60) mit ausreichend Flexibilität ausgebildet ist, um eine Expansion des Brennstoffzellenstapels (30) innerhalb dynamischer Betriebsgrenzen des Stapels (30) zuzulassen, sowie eine vorbestimmte Biegefestigkeit aufweist, um eine Expansion des Stapels (30) über die dynamischen Betriebsgrenzen des Stapels (30) hinaus zu unterbinden; und
e. Biegen der Zugstangenenden (62, 64, 66, 68) innerhalb eines Spalts (84), der zwischen den Zugstangenenden (62, 64, 66, 68) und der Biegeebene (50) gebildet ist, durch Festziehen der Zugstangen (78, 80) innerhalb der Zugstangenenden (62, 64, 66, 68) des Rückgratelements (60).

## Revendications

1. Assemblage de piles à combustible (30) pour la production d'électricité à partir d'un fluide réducteur et de circuits de réactifs d'oxydation, l'assemblage de piles à combustible (30) comprenant :
plusieurs piles à combustible (32) assemblées dans des positions réciproquement adjacentes pour former une portion de réaction (34) de l'assemblage de piles à combustible (30), lesdites plusieurs piles à combustible (32) englobant une pile terminale (36) à une extrémité externe de la portion de réaction (34) de l'assemblage de piles à combustible (30) ;
l'assemblage de piles à combustible (30) étant **caractérisé par** un assemblage de plaques terminales intégrées (38) fixées en position adjacente à la pile terminale (36), l'assemblage englobant :
i. un collecteur de courant (40) fixé en position adjacente à et en communication électrique avec la pile terminale (36) ;
ii. une plaque de pression (42) fixée en position adjacente au collecteur de courant et recouvrant la pile terminale (36), la plaque de pression (42) définissant un plan d'armature-support (44) s'étendant sur une distance allant d'un centre (46) de la plaque de pression jusqu'à entre environ 30 % et environ 80 % d'une distance entre le centre (46) de la plaque de pression (42) et un périmètre externe (48) de la plaque de pression (42), et la plaque de pression (42) définissant un plan de déviation (50) s'étendant entre le plan d'armature-support (44) et le périmètre externe (48) de la plaque de pression (42), le plan de déviation (50) étant également situé entre le plan d'armature-support (44) et une surface de contact (54) de la plaque de pression (42) adjacente au collecteur de courant (40), le terme « environ » correspondant à plus ou moins 20 % ;
iii. une armature (60) englobant plusieurs extrémités de barres de liaison (62, 64, 66, 68) définissant des alésages de passage (70, 72, 74, 76) configurés pour recevoir et fixer les barres de liaison (78, 80) en position adjacente à un périmètre (48) de la plaque de pression (42), l'armature (60) englobant au moins une traverse (82) s'étendant entre les extrémités de barres de liaison (62, 64, 66, 68), l'armature (60) étant fixée en position adjacente au plan d'armature-support (44) et étant configurée pour entrer en contact avec le plan d'armature-support (44) et pour s'étendre le long de ce dernier, et les extrémités de barres de liaison (62, 64, 66, 68) de l'armature (60) étant configurées pour recouvrir le plan de déviation (50) et pour définir un espace libre (84) entre les extrémités de barres de liaison (62, 64, 66, 68) et le plan de déviation (50), l'armature (60) étant configurée pour posséder une flexibilité adéquate pour permettre l'expansion de l'assemblage de piles à combustible (30) dans des limites dynamiques de travail de l'assemblage (30) et possédant une résistance prédéterminée à la flexion pour empêcher une expansion de l'assemblage (30) au-delà des limites dynamiques de travail de l'assemblage (30) ; et
iv. le fait que le plan de déviation (50) est défini dans les limites de la plaque de pression (42) à une distance prédéterminée par rapport au plan d'armature-support (44) pour permettre la flexion de l'armature (60) au sein de l'espace libre (84).

2. Assemblage de piles à combustible (30) selon la revendication 1, dans lequel le plan d'armature-support s'étend sur une distance allant du centre (46) de la plaque de pression jusqu'à entre environ 50 % et environ 60 % d'une distance entre le centre (46) de la plaque de pression (42) et un périmètre externe (48) de la plaque de pression (42).

3. Assemblage de piles à combustible (30) selon la revendication 1, dans lequel la traverse (82) de l'armature (60) s'étend en passant par le centre (46) de la plaque de pression (42).

4. Assemblage de piles à combustible (30) selon la revendication 1, dans lequel une aire de section transversale plane maximale de l'armature (60) dans un plan parallèle à la surface de contact (54) de la plaque de pression (42) n'est pas supérieure à environ 50 % d'une aire de section transversale plane de la plaque de pression (42) dans un plan parallèle à la surface de contact (54) de la plaque de pression (42).

5. Assemblage de piles à combustible (30) selon la revendication 1, dans lequel la plaque de pression (42) définit plusieurs parois (56A, 56B, 56C, 56D) en position adjacente à l'armature (60) et s'élevant dans une direction qui s'écarte du collecteur de courant (40), lesdites plusieurs parois (56A, 56B, 56C, 56D) étant configurées pour empêcher un mouvement latéral de l'armature (60) dans n'importe quelle direction approximativement parallèle à un plan défini par la surface de contact (54) de la plaque de pression (42).

6. Procédé pour la fixation dynamique de piles à combustible (32, 36) au sein d'un assemblage de piles à combustible (30), comprenant les étapes consistant à :
a définir un plan d'armature-support (44) au sein d'une plaque de pression (42), le plan d'armature-support (44) étant configuré pour s'étendre sur une distance allant du centre (46) de la plaque de pression (42) jusqu'à entre environ 30 % et environ 80 % d'une distance entre le centre (46) de la plaque (42) et un périmètre externe (48) de la plaque (42), et définissant un plan de déviation (50) au sein de la plaque de pression (42) s'étendant entre le plan d'armature-support (44) et le périmètre externe (48) de la plaque de pression (42), et entre le plan d'armature-support (44) et une surface de contact (54) de la plaque de pression (42), le terme « environ » correspondant à plus ou moins 20 % ;
b. fixer la surface de contact (54) de la plaque de pression (42) en position adjacente à un collecteur de courant (40) ;
c. fixer le collecteur de courant (40) en position adjacente à une pile terminale (36) de l'assemblage (30) ;
d. fixer une armature (60) au sein du plan d'armature-support (44) de telle sorte que les extrémités de barres de liaison (62, 64, 66, 68) de l'armature (60) s'étendent par-dessus le plan de déviation (50) défini au sein de la plaque de pression (42), l'armature (60) étant configurée pour posséder une flexibilité adéquate pour permettre l'expansion de l'assemblage de piles à combustible (30) dans des limites dynamiques de travail de l'assemblage (30) et possédant une résistance prédéterminée à la flexion pour empêcher une expansion de l'assemblage (30) au-delà des limites dynamiques de travail de l'assemblage (30) ; et
e. fléchir les extrémités de barres de liaison (62, 64, 66, 68) au sein d'un espace libre (84) défini entre les extrémités de barres de liaison (62, 64, 66, 68) et le plan de déviation (50) en serrant les barres (78, 80) au sein des extrémités de barres de liaison (62, 64, 66, 68) de l'armature (60).
